(19) **Europäisches Patentamt European Patent Office Office européen des brevets**

(11) **EP 4 692 920 A1**

(12) **EUROPEAN PATENT APPLICATION**

(43) Date of publication:
**11.02.2026 Bulletin 2026/07**

(21) Application number: **24192910.8**

(22) Date of filing: **05.08.2024**

(51) International Patent Classification (IPC):
*G02F 1/35* (2006.01)   *G02F 1/39* (2006.01)

(52) Cooperative Patent Classification (CPC):
**G02F 1/39; G02F 1/3503**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Quantum Industries GmbH**
  **1100 Vienna (AT)**
• **Quantum Technology Laboratories GmbH**
  **1100 Vienna (AT)**

(72) Inventors:
• **FINK, Matthias**
  **1100 Vienna (AT)**
• **HEINE, Thomas**
  **1100 Vienna (AT)**
• **NEUMANN, Sebastian Philipp**
  **1100 Vienna (AT)**

(74) Representative: **Meissner Bolte Partnerschaft mbB**
**Patentanwälte Rechtsanwälte**
**Postfach 10 26 05**
**86016 Augsburg (DE)**

Remarks:
Amended claims in accordance with Rule 137(2) EPC.

(54) **ENTANGLED PHOTON SOURCE**

(57)    It is provided an entangled photon source (1) for the generation of polarization entangled photon pairs (9) comprising a laser (2) configured to generate a polarized laser beam (3) in the range of 630 nm to 790 nm, and a nonlinear element (4) configured to generate photon pairs (5) by the transmission of the laser beam (3), and a dichroic element (8) configured to separate the entangled photon pairs (9) and the laser beam (3).

Essential is, that the source (1) comprises in addition a polarization rotation element (6) and a reflection element (7) configured to reflect the laser beam (3) after the first transmission through the nonlinear element (4) for a second transmission through the nonlinear element (4).

*Fig. 1*

**Description**

The present invention provides an entangled photon source for the generation of polarization entangled photon pairs according to the preamble of claim 1 and a method for the generation of polarization entangled photon pairs according to the preamble of claim 12.

Entangled photon pairs are crucial for applications of quantum communications like quantum key distribution (QKD) or teleportation. A large number of different source designs for the generation of entangled photon pairs is known, such as the Sagnac-source configuration or linear sources with a BBO-crystal, periodically poled non-linear crystals or a crossed-crystal configuration.

The disadvantage of known entangled photon sources is that these are either based on a complex design difficult to adjust and maintain and/or require a temporal compensation of the walk-off effect of the generated entangled photon pairs, leading either to reduction of the quality of the entangled state or to complex assemblies unsuitable for mass production.

It is an object of the present invention to provide a more stable and easier to adjust entangled photon source and such a method for the generation of high-quality entangled photon pairs.

According to the present invention, an entangled photon source is provided according to claim 1.

This object is achieved by an entangled photon source for the generation of polarization entangled photon pairs comprising

> a laser configured to generate a polarized laser beam in the range of 630 nm to 790 nm, and
> a nonlinear element configured to generate photon pairs by the transmission of the laser beam, and
> a dichroic element configured to separate the entangled photon pairs and the laser beam.

According to the invention, the source comprises in addition a polarization rotation element and a reflection element configured to reflect the laser beam after the first transmission through the nonlinear element for a second transmission through the nonlinear element.

According to the present invention, a method for the generation of polarization entangled photon pairs is provided according to claim 12.

The object is further achieved by a method for the generation of polarization entangled photon pairs with the steps:

> i) generating a polarized laser beam in the range of 630 nm to 790 nm;
> ii) generating entangled photon pairs;
> iii) separating the laser beam and the polarization entangled photon pairs by a dichroic element.

According to the invention, the generation of the polarization entangled photon pairs is realized in step ii) by transmitting the laser beam a first time through a nonlinear element, transmitting and reflecting the laser beam behind the nonlinear element through a polarization rotation element and by a reflection element, and transmitting the laser beam a second time through the nonlinear element, and in step ii) the polarization entangled photon pairs are generated by transmitting the laser beam two times through a nonlinear element.

By the reflection of the laser beam after the first transmission through the nonlinear element for a second transmission an easy to align and maintainable source and method is provided with only few optical components. In contrast to that, for example in a Sagnac-configuration source many optical components in a specific configuration are necessary to keep the Sagnac loop interferometrically stable and the alignment of all components is a crucial and hard task.

An advantage of the inventive source and method with the reflective element is in addition that the same nonlinear element is used for the generation of the entangled photon pairs by two transmissions of the laser beam, leading to a higher efficiency in creating entangled states, since the pump power is used twice. In contrast to that, for crossed-crystal sources, two different crystals have to be used, leading to a reduction of the entangled state due to differences of the crystal properties.

The above-described inventive source with the double pass of the laser beam through the nonlinear element by the reflection element can also be called a double-pass configuration source.

In a preferred embodiment, the nonlinear element is a periodically poled Lithium Niobate crystal (ppLN) or a periodically poled potassium titanyl phosphate crystal (ppKTP). In a preferred embodiment, in step ii) the polarization entangled photon pairs are generated by transmitting the laser beam two times through a periodically poled Lithium Niobate crystal (ppLN) or a periodically poled potassium titanyl phosphate crystal (ppKTP) as nonlinear element. An advantage of this embodiment is the linear configuration of the source in combination with the use of the periodically poled Lithium Niobate crystal (ppLN) or the periodically poled potassium titanyl phosphate crystal (ppKTP) as nonlinear element.

By the inventive source and method of pumping the periodically poled Lithium Niobate crystal (ppLN) or the periodically poled potassium titanyl phosphate crystal (ppKTP) with a polarized laser beam in the range of 630 nm to 790 nm, nearly no pump light absorption is taking place inside the crystal. This is not only important for the efficiency of the source and method, but also for the quality of the entangled state. If the laser beam is much weaker in the second pass through the crystal due to the absorption happening in the first pass, the probability to generate a photon pair in the second transmission is lower, leading to an imbalanced state and reduced interference. For a perfectly entangled state, however, the probabilities for the generation of photon pairs in the first and the second transmission have to be exactly equal. Thus, the advantage of the inventive source and inventive method with the periodically poled Lithium Niobate crystal (ppLN) or the periodically poled potassium titanyl phosphate crystal (ppKTP) is that no additional or specifically designed optical elements have to be used in order to allow the generation of polarization entangled photon pairs with high quality. This allows to pump the crystal with perfectly linear polarization in both passes.

In a preferred embodiment, the photon pairs, preferably the entangled photon pairs, are generated by spontaneous parametric down-conversion in the nonlinear element. In spontaneous parametric down-conversion, by pumping the nonlinear element with the laser beam, a photon pair with a signal photon and an idler photon is generated.

In a preferred embodiment, the periodically poled Lithium Niobate crystal (ppLN) or the periodically poled potassium titanyl phosphate crystal (ppKTP) as nonlinear element is a type-0 nonlinear element. The advantage of a type-0 element is that the polarizations of the generated photons of one pair are equal, thus no polarization dispersive effects between the photons of a pair take place. Another advantage is that the type-0 spontaneous parametric down-conversion is more efficient and produces a broader spectrum than type I or type II.

In a preferred embodiment, the entangled photon pairs are generated in a broad spectral width, preferably in a spectral width between 100 nm and 40 nm, preferably 60 nm. In a preferred embodiment, the entangled photon pairs are generated in a degenerate spectral range, preferably in spectral range between 1260 nm to 1400 nm or between 1500 nm to 1580 nm, preferably in the spectral range between 1280 nm to 1380 nm or between 1520 nm to 1580 nm. Degenerate means that the spectral ranges in which the idler photon and the signal photon of each pair are generated overlap. Therefore, the effect of the different, wavelength-dependent dispersive characteristics of the crystal is avoided. By generation of the polarization entangled photon pairs with telecommunication wavelengths and using the periodically poled Lithium Niobate crystal (ppLN) or the periodically poled potassium titanyl phosphate crystal (ppKTP) that is less lossy and dispersive for the respective wavelengths, the setup and the method is strongly simplified and stabilized.

In a preferred embodiment, the nonlinear element is temperature stabilized. The temperature stabilization is preferably realized by a heating element, preferably by an oven or a thermoelectric cooling or heating Peltier (TEC) element with or without a cover for the nonlinear element. By that, a constant entangled state with high quality can be generated. In a preferred embodiment, only the nonlinear element is temperature stabilized in the source. By that embodiment, only one single element must be controlled leading to an easy to adjust and maintainable source.

In a preferred embodiment, the photons of the entangled photon pairs are non-degenerate. Non-degenerate means, that the wavelength of the signal photon and the idler photon of a pair is different. The advantage of using the periodically poled Lithium Niobate crystal (ppLN) or the periodically poled potassium titanyl phosphate crystal (ppKTP) as nonlinear element in combination with the broad spectral width is the possibility to use signal and idler photon pairs at different wavelengths out of the spectral width (e.g. at 1540 and 1560nm), because these frequencies, even non-degenerate signal photon and idler photon wavelengths do not accumulate a phase shift (also called accumulated phase) that has to be compensated. This is because around 1550 nm or 1350 nm, the dispersion inside the nonlinear element is nearly constant for a broad wavelength range. Another advantage of the use of non-degenerate photons is the possibility to separate the signal and idler photon of each entangled photon pair by their wavelength for the use of quantum communication. This can be for example realized by a dichroic element behind the entangled photon source, separating the signal and idler photons for the transmission to two different receivers.

In a preferred embodiment, no element for the compensation of an accumulated phase is arranged in the source. Preferably, the accumulated phase is introduced by the nonlinear element and/or the polarization rotation element. In a preferred embodiment, no compensation of an accumulated phase is performed in the method for the generation of polarization entangled photon pairs. That means, that the photon pairs generated in step ii) are not transmitted through an element for the compensation of an accumulated phase. The accumulated phase can also be called a dispersion dependent phase pickup. In known sources it is necessary to compensate for the accumulated phase. This term refers to a quantity that can have qualitatively different effects in the context of quantum entanglement as described in the following.

A first effect is if the phase introduces a shift over many wavelengths to an extent that makes the two wave-packets walk off with respect to each other (i.e., shift them such that their coherence lengths do not fully overlap anymore). This can also be called a different dispersive characteristic for different polarized photon pairs. In this case, the wave packets become distinguishable, and they interfere less or not at all, which reduces the quality of entanglement. This effect is entirely analogous to having two classical wave packets interfering to yield diagonal polarization: If the individual horizontal polarization components and vertical polarization components experience a walk-off with respect to each other, the diagonally polarized light separates into two polarization modes (namely horizontal polarization and vertical polarization), and interference is lost. Compensation of this "strong" phase is often called "walk-off compensation" or "walk-off phase".

The accumulated phase difference $\phi(\lambda_s, \lambda_i)$ can be described by:

$$\phi(\lambda_s, \lambda_i) = \phi_P^V + \phi_s^H + \phi_i^H - (\phi_s^V + \phi_i^V)$$

$$= \phi_P^V + 2\pi L \left( \frac{n_y(\lambda_i)}{\lambda_i} + \frac{n_y(\lambda_s)}{\lambda_s} \right) + 2\phi_{qwp}(\lambda_s, \lambda_i)$$

With $\phi$ as the phase, V as linear vertical polarization, H as linear horizontal polarization, P as pump, s as signal, i as idler, n as refractive index, $\lambda$ as wavelength, L as length of the nonlinear element, and $\phi_{qwp}$ as the phase of the rotation element.

The pump phase does not depend on signal or idler wavelength, and thus can be ignored. The remaining part of the above-described formula describes the deterioration of the fidelity (or visibility) of the entangled state for non-degenerate wavelengths by the accumulated phase between signal and idler photons. Non-degenerate wavelengths means that the wavelengths of the signal and idler photon of a photon pair are different. The effect causes a measurable deterioration of the entangled state's fidelity if the difference in birefringence is in the order of the photon's coherence length, therefore leading to distinguishability of the H and V contributions as it is the case in known sources.

In known sources and methods, a compensation crystal is necessary to compensate the accumulated phase, which would otherwise reduce the fidelity (visibility) of the entangled state. By this compensation crystal another phase $\phi_C$ $(\lambda_s, \lambda_i)$ is introduced to set the overall phase to 0 or to set at least the same phase for the signal and the idler photons, i.e., only the first derivative with respect to the wavelength needs to be 0, or at least the induced shift must be smaller than the coherence time, in the range $(\lambda_s, \lambda_i)$. By the compensation crystal in known sources $\phi_C(\lambda_s, \lambda_i) + \phi(\lambda_s, \lambda_i) \approx C$ is achieved with C as a constant.

The advantage of the inventive source and method is that by the combination of the use of the specific wavelength range of the laser beam, the material of the nonlinear element, the possibility to use waveplates with no substantial wavelength dependence and the design of the source with the double-pass configuration, $\phi(\lambda_s, \lambda_i) \approx C$ is given without the need of an additional crystal.

As an example, the element for the compensation of the accumulated phase can be a dispersive material or an interferometer. Preferably, the dispersive material is an Yttrium orthovanadate (YVO$_4$) crystal.

It must be noted that the element for the compensation must be temperature stabilized in order not to introduce additional temporal phase drift of the entangled state. This temperature stabilization is to be precise within the range of +/-0.01°C. This is because changing the temperature leads to a change of the refractive index and therefore the optical path lengths of ordinary and extraordinary YVO axis, in turn changing the relative phase between the two-photon emissions (not, or only marginally, between the signal and idler photons). By the inventive system and method, this complex and precise temperature stabilization is not necessary, leading to a more stable source generating entangled photon pairs with high efficiency.

In a second phenomenon, if the phase between different photon states, which interfere to produce entanglement, refers to a temporal/longitudinal shift which is shorter than the coherence time of the wave-packets, then the phase only rotates the polarization of the overall entangled state. This happens when the above-described difference in birefringence does not become as large as or larger than the photon pair's coherence length. As long as this phase difference does not drift over time, it can easily be compensated, e.g. by using a combination of half- and quarter-wave plates or manual polarization controllers in either one or both arms of the photon path. It does not change the fidelity of the entangled state itself, only which kind of Bell state it is and in which basis it should be measured. Therefore, such a phase is compensated in known sources for example by the aforementioned combination of half- and quarter-wave plates or manual polarization controllers as long as it does not drift to fast. Drift can be circumvented by stabilizing the crystal temperature to about +/-0.01 °C.

In a preferred embodiment, no absorption compensation element is arranged in the source. In a preferred embodiment, no absorption compensation is performed for the generation of polarization entangled photon pairs. For the generation of polarization entangled photon pairs with high quality the amplitudes of the photon pairs generated at the first transmission of the laser beam and the second transmission of the laser beam must be equal. For that, the intensity of the laser beam must be equal in both transmissions. If the pump beam is much weaker in the second pass, less photon pairs are produced in the second pass. With a 405 nm laser beam, typically 30% of the laser beam are absorbed in the first pass through the nonlinear element. This leads to a strong reduction in entanglement quality.

In a preferred embodiment, the laser beam is linearly polarized. In a preferred embodiment, the laser is configured to generate a linearly polarized laser beam or after the laser, optical components are arranged for a polarization rotation of the laser beam to a linear polarized laser beam. The advantage of a linearly polarized laser beam in combination with the periodically poled Lithium Niobate crystal (ppLN) or the periodically poled potassium titanyl phosphate crystal (ppKTP) as type-0 nonlinear element is that each photon of a pair is generated with linear polarization. In addition, by the linear polarization the state is generated more efficiently.

In a preferred embodiment, the laser beam is in the range of 630 nm to 700 nm or 750 nm to 790 nm. By that the entangled photon pairs in the range of 1260 nm to 1400 nm or between 1500 nm to 1580 nm, preferably in the spectral range between 1300 nm to 1380 nm or between 1520 nm to 1580 nm can be generated.

In a preferred embodiment, the polarization rotation element is a waveplate, preferably configured to act as a half-wave-plate for one transmission or a full-wave plate for two transmissions, preferably a half-wave-plate at 45° for one transmission, for the laser beam and is configured to act as a quarter-wave-plate, preferably a quarter-wave-plate at 45°, for the photons of a photon pair. In a preferred embodiment, the polarization rotation element work for both wavelengths, the pump beam, and the photon pairs. This way by a double transmission of the laser beam, the polarization of the laser beam is maintained; and by a double transmission of a photon pair generated at a first transmission of the laser beam through the nonlinear crystal, the polarization of the photon pair from the first transmission is rotated linearly by 90°. The advantage of the use of periodically poled Lithium Niobate crystal (ppLN) or the periodically poled potassium titanyl phosphate crystal (ppKTP) in addition to the laser beam in the range of 630 nm to 790 nm is that an ordinary wavelength wave plate can be used, that means waveplates with no substantial wavelength dependence. In a preferred embodiment, the polarization rotation element is a Fresnel Rhomb. The advantage of a Fresnel Rhomb is a good polarization rotation over a broad spectral range.

In a preferred embodiment, the reflection element is a mirror or a spherical mirror. By that, a single element can be used for the back reflection of the laser beam and the photon pairs.

In a preferred embodiment, the laser, the nonlinear element, the polarization rotation element and the reflection element are arranged one after the other so that the laser beam is transmitted a first time through the nonlinear element and the polarization rotation element, then is reflected at the reflection element and transmitted a second time through the polarization rotation element and the nonlinear element. In addition, the laser, the nonlinear element, the polarization rotation element and the reflection element are arranged one after the other so that photon pairs generated at the first transmission of the laser beam through the nonlinear element are transmitted through the polarization rotation element, then reflected at the reflection element, transmitted a second time through the polarization rotation element and then transmitted through the nonlinear element. The photon pairs generated by the second transmission of the laser beam are transmitted in the direction of the laser beam out of the nonlinear element.

For the generation of the polarization entangled photon pairs, it is noted that if the spatial modes of both emission processes (that means the generation of the photon pairs) perfectly overlap between the nonlinear element and the dichroic element, then the two emission processes from the first and the second pass through the nonlinear element are not distinguishable. This means that the emission processes interfere and no information about the polarization state of the photons exists, except that they must be equal for each pair (in a type-0 configuration) when measured in the linear basis. Therefore, the photons cannot be described individually anymore, and the photons become entangled.

In a preferred embedment in step ii) the following steps can be provided in this order:

a) transmission of the laser beam a first time through the nonlinear element for a possible generation of a polarized photon pair;

b) transmission of the laser beam and the possible photon pair through a polarization rotation element and reflection of the laser beam and the possible photon pair behind the nonlinear element for a second transmission through the polarization rotation element and the nonlinear element, while the polarization of the laser beam before and after the reflection element and the polarization rotation element is the same and the polarization of the possible generated photon pair is rotated linearly by 90°;

c) second transmission of the laser beam through the nonlinear element for a second possible generation of a polarized photon pair for the generation of the polarization entangled photon pairs.

By that arrangement and that steps the, preferably vertically, linearly polarized laser beam can generate a photon pair with, preferably vertically, linearly polarized signal and idler photons in its first transmission of the nonlinear element. After the first transmission of the laser beam through the nonlinear element, the laser beam is transmitted through the polarization rotation element, reflected on the reflection element and transmitted a second time through the polarization rotation element. By that the laser beam is then transmitted a second time through the nonlinear element with a linear polarization and can generate a photon pair with vertical polarized signal and idler photons in its second transmission. The polarization of the vertical polarized signal and idler photons of the first transmission is rotated to a linear horizontal polarization after the two times transmission through the polarization rotation element by the reflection on the reflection element. By that, after the two transmissions the possible photon pair of the first transmission with linear horizontal polarized photons is superposed with the possible photon pair of the second transmission with linear vertical polarized photons generating a polarization entangled state, namely in this case a Phi Bell state.

In a preferred embodiment, the dichroic element is a dichroic mirror configured to reflect or transmit the entangled photon pairs or to transmit or reflect the laser beam. The dichroic mirror is preferably a high reflection element for the laser beam or for the entangled photon pairs, preferably a long-pass filter or a short-pass filter.

In a preferred embodiment, behind the dichroic element in the path of the polarization entangled photon pairs a second dichroic element is arranged for the separation of the signal photon and the idler photon of each pair. In a preferred embodiment, the dichroic element can be a free-space element or a wavelength-division multiplexing (WDM) fiber element or a wavelength-division de-multiplexing (WDDM) fiber element. The advantage of the fiber element is that the separation of the signal and idler photon takes already place inside the fiber, thus only one coupling means for the signal and idler photons from the source can be used. A separate coupling of the signal photon and the idler photon in two separated coupling means which introduce additional loss is by that not necessary. By that, a quantum communication or a quantum key distribution between two receivers can be established.

The above and other aspects, features and advantages of the present invention will become more apparent from the following detailed description when taken in conjunction with the accompanying drawings.

Brief description of the drawings:

Fig. 1:    schematic diagram of a of the inventive source for the generation of polarization entangled photon pairs;

Fig. 2:    source of Fig. 1 with depicted polarization of the laser beam and the photon pairs for the generation of polarization entangled photon pairs.

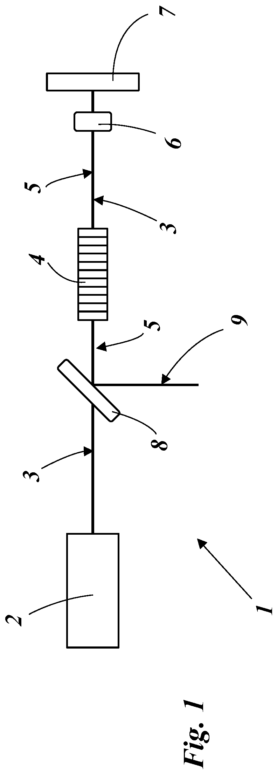

Fig. 1 shows a source 1 for the generation of polarization entangled photon pairs 9. The source 1 comprises a laser 2, a nonlinear element 4, a polarization rotation element 6, a reflection element 7 and a dichroic element 8.

The laser 2 generates a laser beam 3 which is transmitted through the dichroic element 8, a first time transmitted through the nonlinear element 4 and the polarization rotation element 6, then reflected by the reflection element 7 for a second transmission through the polarization rotation element 6 and the nonlinear element 4. After that the laser beam 3 is transmitted a second time through the dichroic element 8. By the two times transmission of the laser beam 3 photon pairs 5 can be generated in each transmission leading to a superposition of both possible generations to a polarization entangled photon pair as described below.

In the embodiment of Fig. 1 the laser 2 generates a laser beam 3 in the range of 630 nm to 790 nm with vertical polarization. By the transmission of the laser beam 3 each time through the nonlinear element 4 which is in this embodiment a periodically poled Lithium Niobate crystal (ppLN) or the periodically poled potassium titanyl phosphate crystal (ppKTP) a photon pair 5 with a signal photon and an idler photon with vertical polarization in a spectral range of 1260 nm to 1400 nm or between 1500 nm to 1580 nm can be generated.

Can be generated means that by the nonlinear optical process of spontaneous parametric down-conversion (also known as SPDC, parametric fluorescence or parametric scattering) one photon of the laser beam 3 with higher energy is converted into a pair of photons 5 (namely a signal photon and an idler photon) of lower energy, in accordance with the law of conservation of energy and law of conservation of momentum. The conversion efficiency of spontaneous parametric down-conversion is typically very low, with the highest efficiency obtained on the order of $4 \times 10^{-10}$ incoming photons for a periodically poled type-0 Lithium Niobate crystal.

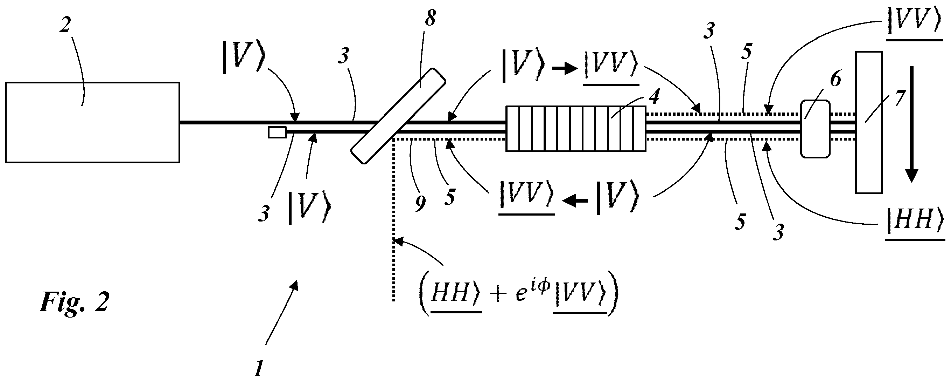

As shown in Fig. 1 no additional element for the compensation of an accumulated phase is arranged in the source 1. In addition, as shown in Fig. 1 no absorption compensation element is arranged in the source. Also as depicted in Fig. 2 no additional element for the compensation of an accumulated phase and no absorption compensation element is necessary for the generation of high-fidelity polarization entangled photon pairs.

The generation of the polarization entangled photon pairs 9 is shown in detail in Fig. 2. Fig. 2 shows the entangled photon source of Fig. 1 and for a better understanding of the generation of the entangled photon pairs in Fig. 2 the spatial mode of the laser beam and the photon pairs are shown offset to each other, which is only a schematic presentation.

The laser 2 generates the laser beam 3 with a vertical polarization $|V\rangle$ and is transmitted though the dichroic element 8 for a first transmission through the nonlinear element 4. As depicted in Fig. 2 by the first transmission of the laser beam 3 a photon pair 5 with vertical polarized photons $|\underline{VV}\rangle$ can be generated depicted by the upper $|V\rangle \rightarrow |\underline{VV}\rangle$ in Fig. 2.

After the first transmission of the laser beam 3, the laser beam 3 is transmitted through the polarization rotation element 6 a first time, reflected at the reflection element 7, and transmitted a second time through the polarization rotation element 6. The polarization rotation element 6 is configured to maintain the vertical polarization of the laser beam 3 by the two transmissions which allows the laser beam 3 to generate the photon pairs 5 at a second transmission of the nonlinear element 4 after the reflection on the reflection element depicted by the lower $|V\rangle \rightarrow |\underline{VV}\rangle$ in Fig. 2.

The photon pair 5 generated at the first transmission of the laser beam 3 with vertical polarized photons $|\underline{VV}\rangle$ is also transmitted a first time through the polarization rotation element 6 reflected by the reflection element 7, and transmitted a second time through the polarization rotation element 6. The polarization rotation element 6 is configured to rotate the polarization of the photon pairs 5 from $|VV\rangle$ to $|HH\rangle$ as depicted by $|VV\rangle \rightarrow |HH\rangle$ in Fig. 2. By the superposition of the first and second generation possibility of the photon pairs 5 with different polarization an polarization entangled photon pair 9 is generated as depicted by $|HH\rangle + e^{i\phi}|VV\rangle$ in Fig. 2.

Reference signs:

1      source
2      laser
3      laser beam
4      nonlinear element
5      photon pair
6      polarization rotation element
7      reflection element
8      dichroic element
9      polarization entangled photon pairs

**Claims**

1. Entangled photon source (1) for the generation of polarization entangled photon pairs (9) comprising

   a laser (2) configured to generate a polarized laser beam (3) in the range of 630 nm to 790 nm, and
   a nonlinear element (4) configured to generate photon pairs (5) by the transmission of the laser beam (3), and
   a dichroic element (8) configured to separate the entangled photon pairs (9) and the laser beam (3),
   **characterized in that**
   the source (1) comprises in addition a polarization rotation element (6) and a reflection element (7) configured to reflect the laser beam (3) after the first transmission through the nonlinear element (4) for a second transmission through the nonlinear element (4).

2. Entangled photon source (1) according to claim 1,
   **characterized in that**

   no element for the compensation of an accumulated phase is arranged in the source (1), and/or
   no absorption compensation element is arranged in the source.

3. Entangled photon source (1) according to one of claims 1 or 2, **characterized in that**
   the nonlinear element is a periodically poled Lithium Niobate crystal (ppLN) or a periodically poled potassium titanyl phosphate crystal (ppKTP), preferably the periodically poled Lithium Niobate crystal (ppLN) or the periodically poled potassium titanyl phosphate crystal (ppKTP) as nonlinear element (4) is a type-0 nonlinear element.

4. Entangled photon source (1) according to one of claims 1 to 3, **characterized in that**

   the polarization entangled photon pairs (9) are generated in a broad spectral width, preferably in a spectral width between 100 nm and 40 nm, preferably 60 nm, and/or
   the polarization entangled photon pairs (9) are generated in a degenerate spectral range, preferably in spectral range between 1260 nm to 1400 nm or between 1500 nm to 1580 nm, preferably in the spectral range between 1280 nm to 1380 nm or between 1520 nm to 1580 nm.

5. Entangled photon source (1) according to one of claims 1 to 4, **characterized in that**
   the nonlinear element (4) is temperature stabilized.

6. Entangled photon source (1) according to one of claims 1 to 5, **characterized in that**
   the laser beam (3) is linearly polarized.

7. Entangled photon source (1) according to one of claims 1 to 6, **characterized in that**
   the laser beam (3) is in the range of 630 nm to 700 nm or 750 nm to 790 nm.

8. Entangled photon source (1) according to one of claims 1 to 7, **characterized in that**
the polarization rotation element (6) is configured to act as a half-wave-plate for one transmission or a full-wave-plate for two transmissions, preferably a half-wave-plate at 45° for one transmission, for the laser beam (3) and is configured to act as a quarter-wave-plate, preferably a quarter-wave-plate at 45°, for the photons of a photon pair (5).

9. Entangled photon source (1) according to one of claims 1 to 8, **characterized in that**
the reflection element (7) is a mirror or a spherical mirror.

10. Entangled photon source (1) according to one of claims 1 to 9, **characterized in that**

the laser (2), the nonlinear element (4), the polarization rotation element (6) and the reflection element (7) are arranged one after the other so that the laser beam (3) is transmitted a first time through the nonlinear element (4) and the polarization rotation element (6), then is reflected at the reflection element (7) and transmitted a second time through the polarization rotation element (6) and the nonlinear element (4), and/or
the laser (2), the nonlinear element (4), the polarization rotation element (6) and the reflection element (7) are arranged one after the other so that photon pairs (5) generated at the first transmission of the laser beam (3) through the nonlinear element (4) are transmitted through the polarization rotation element (6), then reflected at the reflection element (7), transmitted a second time through the polarization rotation (6) element and then transmitted through the nonlinear element (4).

11. Entangled photon source (1) according to one of claims 1 to 10, **characterized in that**
the dichroic element (8) is a dichroic mirror, preferably a high reflection element for the laser beam or for the entangled photon pairs.

12. Method for the generation of polarization entangled photon pairs (9) with the steps:

i) generating a polarized laser beam (3) in the range of 630 nm to 790 nm;
ii) generating entangled photon pairs (9);
iii) separating the laser beam (3) and the polarization entangled photon pairs (9) by a dichroic element (8),

**characterized in that**

the generation of the polarization entangled photon pairs (9) is realized in step ii) by transmitting the laser beam (3) a first time through a nonlinear element (4), transmitting and reflecting the laser beam (3) behind the nonlinear element (4) through a polarization rotation element (6) and by a reflection element (7), and transmitting the laser beam (3) a second time through the nonlinear element (4), and
in step ii) the polarization entangled photon pairs (9) are generated by transmitting the laser beam (3) two times through a nonlinear element (4).

13. Method according to claim 12,
**characterized in that**
the photon pairs (5), preferably the entangled photon pairs (9), are generated by spontaneous parametric down-conversion in the nonlinear element (4).

14. Method according to one of claims 12 or 13,
**characterized in that**

no compensation of an accumulated phase is performed in the method for the generation of polarization entangled photon pairs (9), and/or
no absorption compensation is performed for the generation of polarization entangled photon pairs.

15. Method according to one of claims 12 to 14,
**characterized in that**
in step ii) the following steps can be provided in this order:

a) transmission of the laser beam (3) a first time through the nonlinear element (4) for a possible generation of a polarized photon pair;
b) transmission of the laser beam (3) and the possible photon pair (5) through a polarization rotation element (6) and reflection of the laser beam (3) and the possible photon pair (5) behind the nonlinear element (4) for a second transmission through the nonlinear element (4), while the polarization of the laser beam (3) before and after the reflection is the same and the polarization of the possible generated photon pair (5) is rotated linearly by 90°;
c) second transmission of the laser beam (3) through the nonlinear element (4) for a second possible generation of a polarized photon pair (5) for the generation of polarization entangled photon pairs (9).

**Amended claims in accordance with Rule 137(2) EPC.**

1. Entangled photon source (1) for the generation of polarization entangled photon pairs (9) comprising

   - a laser (2) configured to generate a polarized laser beam (3) in the range of 630 nm to 790 nm, and
   - a nonlinear element (4) configured to generate photon pairs (5) by the transmission of the laser beam (3), and
   - a dichroic element (8) configured to separate the entangled photon pairs (9), and
   - the laser beam (3),

   the source (1) comprises in addition a polarization rotation element (6) and a reflection element (7) configured to reflect the laser beam (3) after the first transmission through the nonlinear element (4) for a second transmission through the nonlinear element (4)
   **characterized in that**
   the laser (2), the nonlinear element (4), the polarization rotation element (6) and the reflection element (7) are arranged one after the other,

   - so that the laser beam (3) is transmitted a first time through the nonlinear element (4) and the polarization rotation element (6), then is reflected at the reflection element (7) and transmitted a second time through the polarization rotation element (6) and the nonlinear element (4), or
   - so that photon pairs (5) generated at the first transmission of the laser beam (3) through the nonlinear element (4) are transmitted through the polarization rotation element (6), then reflected at the reflection element (7) and transmitted a second time through the polarization rotation (6) element and the nonlinear element (4).

2. Entangled photon source (1) according to claim 1,
   **characterized in that**

   no element for the compensation of an accumulated phase is arranged in the source (1), and/or
   no absorption compensation element is arranged in the source.

3. Entangled photon source (1) according to one of claims 1 or 2,
   **characterized in that**
   the nonlinear element is a periodically poled Lithium Niobate crystal (ppLN) or a periodically poled potassium titanyl phosphate crystal (ppKTP), preferably the periodically poled Lithium Niobate crystal (ppLN) or the periodically poled potassium titanyl phosphate crystal (ppKTP) as nonlinear element (4) is a type-0 nonlinear element.

4. Entangled photon source (1) according to one of claims 1 to 3,
   **characterized in that**

   the polarization entangled photon pairs (9) are generated in a broad spectral width, preferably in a spectral width between 100 nm and 40 nm, preferably 60 nm, and/or
   the polarization entangled photon pairs (9) are generated in a degenerate spectral range, preferably in spectral range between 1260 nm to 1400 nm or between 1500 nm to 1580 nm, preferably in the spectral range between 1280 nm to 1380 nm or between 1520 nm to 1580 nm.

5. Entangled photon source (1) according to one of claims 1 to 4,
   **characterized in that**
   the nonlinear element (4) is temperature stabilized.

6. Entangled photon source (1) according to one of claims 1 to 5,
   **characterized in that**
   the laser beam (3) is linearly polarized.

7. Entangled photon source (1) according to one of claims 1 to 6,
**characterized in that**
the laser beam (3) is in the range of 630 nm to 700 nm or 750 nm to 790 nm.

8. Entangled photon source (1) according to one of claims 1 to 7,
**characterized in that**
the polarization rotation element (6) is configured to act as a half-wave-plate for one transmission or a full-wave-plate for two transmissions, preferably a half-wave-plate at 45° for one transmission, for the laser beam (3) and is configured to act as a quarter-wave-plate, preferably a quarter-wave-plate at 45°, for the photons of a photon pair (5).

9. Entangled photon source (1) according to one of claims 1 to 8,
**characterized in that**
the reflection element (7) is a mirror or a spherical mirror.

10. Entangled photon source (1) according to one of claims 1 to 9,
**characterized in that**
the dichroic element (8) is a dichroic mirror, preferably a high reflection element for the laser beam or for the entangled photon pairs.

11. Method for the generation of polarization entangled photon pairs (9) with the steps:

   i) generating a polarized laser beam (3) in the range of 630 nm to 790 nm;
   ii) generating entangled photon pairs (9);
   iii) separating the laser beam (3) and the polarization entangled photon pairs (9) by a dichroic element (8),

   **characterized in that**

   the generation of the polarization entangled photon pairs (9) is realized in step ii) by transmitting the laser beam (3) a first time through a nonlinear element (4), transmitting and reflecting the laser beam (3) behind the nonlinear element (4) through a polarization rotation element (6) and by a reflection element (7) transmitting the laser beam (3) a second time through the polarization rotation element (6) and the nonlinear element (4), and
   in step ii) the polarization entangled photon pairs (9) are generated by transmitting the laser beam (3) two times through the nonlinear element (4).

12. Method according to claim 11,
**characterized in that**
the photon pairs (5), preferably the entangled photon pairs (9), are generated by spontaneous parametric down-conversion in the nonlinear element (4).

13. Method according to one of claims 11 or 12,
**characterized in that**
no compensation of an accumulated phase is performed in the method for the generation of polarization entangled photon pairs (9), and/or no absorption compensation is performed for the generation of polarization entangled photon pairs.

14. Method according to one of claims 11 to 13,
**characterized in that**
in step ii) the following steps can be provided in this order:

   a) transmission of the laser beam (3) a first time through the nonlinear element (4) for a possible generation of a polarized photon pair;
   b) transmission of the laser beam (3) and the possible photon pair (5) through a polarization rotation element (6) and reflection of the laser beam (3) and the possible photon pair (5) behind the nonlinear element (4) for a second transmission through the nonlinear element (4), while the polarization of the laser beam (3) before and after the reflection is the same and the polarization of the possible generated photon pair (5) is rotated linearly by 90°;
   c) second transmission of the laser beam (3) through the nonlinear element (4) for a second possible generation of a polarized photon pair (5) for the generation of polarization entangled photon pairs (9).

*Fig. 1*

**Fig. 2**

| Europäisches Patentamt European Patent Office Office européen des brevets | **EUROPEAN SEARCH REPORT** | **Application Number** EP 24 19 2910 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RYO NOZAKI ET AL: "Enhancing the stimulated emission of polarization-entangled photons using passive optical components", ARXIV.ORG, CORNELL UNIVERSITY LIBRARY, 201 OLIN LIBRARY CORNELL UNIVERSITY ITHACA, NY 14853, 30 December 2022 (2022-12-30), XP091404406, * figures 1b, 2, 3 * | 1-15 | INV. G02F1/35 G02F1/39 |
| Y | SEBASTIAN PHILIPP NEUMANN ET AL: "Experimental entanglement generation for quantum key distribution beyond 1 Gbit/s", ARXIV.ORG, CORNELL UNIVERSITY LIBRARY, 201 OLIN LIBRARY CORNELL UNIVERSITY ITHACA, NY 14853, 23 September 2022 (2022-09-23), XP091321012, * figure 1 * | 1-15 | |
| A | CN 101 495 907 A (HEWLETT PACKARD DEVELOPMENT CO [US]) 29 July 2009 (2009-07-29) * abstract; figures 3,4 * | 1-15 | **TECHNICAL FIELDS SEARCHED (IPC)** G02F |

The present search report has been drawn up for all claims

| Place of search | Date of completion of the search | Examiner |
|---|---|---|
| The Hague | 10 January 2025 | Gill, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2910

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | | Publication date | Patent family member(s) | | Publication date |
|---|---|---|---|---|---|
| CN 101495907 | A | 29-07-2009 | CN | 101495907 A | 29-07-2009 |
| | | | EP | 2047319 A2 | 15-04-2009 |
| | | | JP | 4842378 B2 | 21-12-2011 |
| | | | JP | 2009545004 A | 17-12-2009 |
| | | | US | 2008037996 A1 | 14-02-2008 |
| | | | WO | 2008013681 A2 | 31-01-2008 |

For more details about this annex : see Official Journal of the European Patent Office, No. 12/82